Europäisches Patentamt

European Patent Office

Office européen des brevets

(19)

(11) Veröffentlichungsnummer: **0 209 664 B1**

# EUROPÄISCHE PATENTSCHRIFT

(12)

(45) Veröffentlichungstag der Patentschrift: **24.07.91**

(51) Int. Cl.5: **B60T 8/00**

(21) Anmeldenummer: **86106736.1**

(22) Anmeldetag: **16.05.86**

(54) **Antiblockiersystem.**

(30) Priorität: **25.07.85 DE 3526559**

(43) Veröffentlichungstag der Anmeldung:
**28.01.87 Patentblatt 87/05**

(45) Bekanntmachung des Hinweises auf die
Patenterteilung:
**24.07.91 Patentblatt 91/30**

(84) Benannte Vertragsstaaten:
**AT DE FR GB IT**

(56) Entgegenhaltungen:
**DE-A- 2 851 107**
**DE-A- 3 026 254**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Pannbacker, Helmut, Dipl.-Ing.
Bruchweg 30
W-3005 Hemmingen 5(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

EP 0 209 664 B1

## Beschreibung

Die Erfindung bezieht sich auf ein Antiblockiersystem für ein Kraftfahrzeug gemäß dem Oberbegriff des Patentanspruchs 1.

Ein Antiblockiersystem (ABS) dient dazu, im Notfall ein Blockieren der Räder zu verhindern, und damit die Lenkfähigkeit des Fahrzeuges bei minimalem Bremsweg zu erhalten.

Hierbei gilt die sogenannte Einzelrad- bzw. Individual-Regelung (IR), bei der jedem Rad ein eigener Regelkanal mit Drehzahlfühler und Regelventil zugeordnet ist, als am wirksamsten, da hiermit die kürzesten Bremswege erzielt werden können (DE-OS 30 26 254).

Nachteilig an diesem System ist lediglich das Auftreten von Giermomenten bei einer Bremsung auf einer Straße mit seitenweise unterschiedlichem Reibwert. Diese Giermomente müssen durch den Fahrer durch geeignetes Gegenlenken ausgeglichen werden. Bei ungünstigen Umständen ist dies nur noch schwer möglich.

Aus diesem Grund ist eine modifizierte Individual-Regelung (MIR) entwickelt worden, die grundsätzlich der IR ähnelt, bei der aber die Bremskraftunterschiede der beiden Räder einer Achse einen festgesetzten Wert nicht überschreiten (DE-OS 28 51 107). Hierdurch lassen sich die zur Giermoment-Korrektur nötigen Lenkwinkel erheblich reduzieren. Bei der modifizierten Individual-Regelung erfolgt die Druckeinsteuerung für die Räder einer Achse jeweils gleichzeitig.

Neben der Einzelradregelung ist auch noch die Select-Low-Regelung (SLR) bekannt, bei der für die beiden Räder einer Achse über ein gemeinsames Regelventil der gleiche Bremsdruck ausgesteuert wird. Dabei ist jedes Rad mit einem Drehzahlfühler ausgerüstet. Die zugehörige Elektronik steuert das gemeinsame Regelventil jeweils nach dem Drehverhalten des auf dem niedrigeren Reibwert laufenden Rades. Das synchron mitgesteuerte andere Rad auf dem höheren Reibwert ist daher im allgemeinen unterbremst. Diese Bauweise hat insbesondere auf Fahrbahnen mit seitenweise unterschiedlichen Reibwerten ( μ-split) den Vorteil einer besonders guten Seitenführungskraft. Dies wird jedoch durch einen längeren Bremsweg erkauft.

Das bekannte Antiblockiersystem nach der DE-OS 30 26 254, von dem die Erfindung ausgeht, weist eine Elektronik mit Einzelrad-Regelung auf, wobei jedoch die beiden Regelventile für eine Achse an ein gemeinsames Wegeventil angeschlossen sind. Hierdurch wird für diese Achse eine Select-Low-Regelcharakteristik erzielt, die in bestimmten Fällen erwünscht ist. Nachteilig an dieser bekannten Lösung ist jedoch der für das zusätzliche Wegeventil zu treibende Aufwand.

Der Erfindung liegt die Aufgabe zugrunde, bei einem Antiblockiersystem mit einer Elektronik für Einzelrad-Regelung ohne größeren Aufwand eine Select-Low-Regelcharakteristik zu erzielen.

Diese Aufgabe wird durch die im Patentanspruch enthaltene Erfindung gelöst.

Die Erfindung wird im folgenden an Hand einer Zeichnung näher erläutert. Diese zeigt schematisch ein 4-Kanal-Antiblockiersystem, bei dem durch die Erfindung trotz Einzelkanal-Elektronik an einer Achse eine Select-Low-Charakteristik erzielt wird.

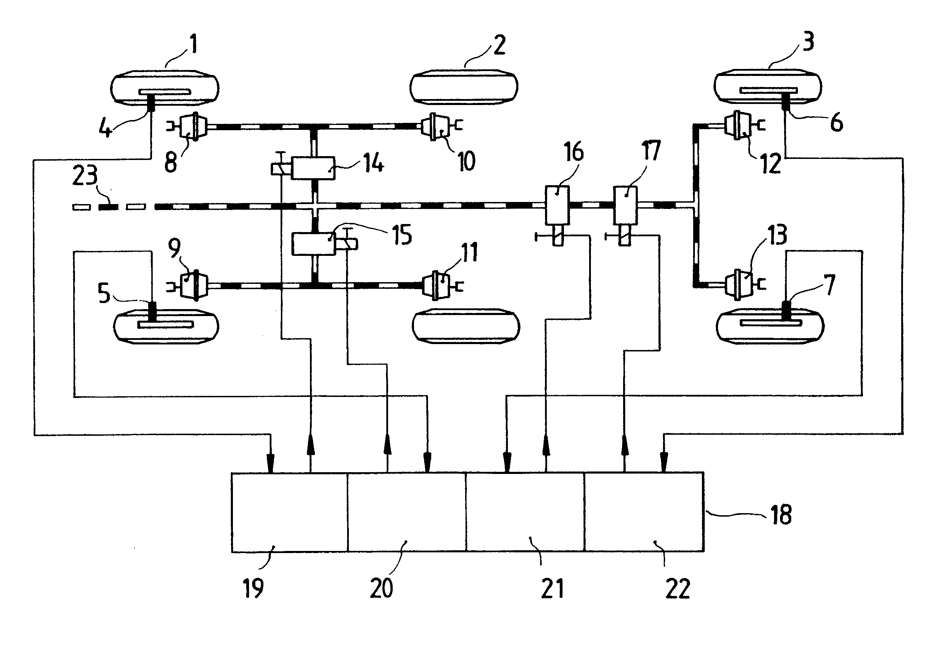

In der einzigen Figur sind die hinteren drei Achsen eines Drei-Achs-Sattelanhängers mit 1, 2, 3 bezeichnet. Die Räder der ersten Achse 1 sind mit Drehzahlfühlern 4, 5 sowie Bremszylindern 8, 9 ausgerüstet. Das zum Drehzahlfühler 4 gehörende Rad wird durch einen Kanal 19 der vierkanaligen Blockierschutz-Elektronik 18 nach dem Individual-Prinzip geregelt. Das zum Drehzahlfühler 5 gehörende Rad wird durch einen Kanal 20 ebenfalls nach dem Individual-Prinzip geregelt.

Die zweite Achse 2 weist zwei Bremszylinder 10, 11 auf. Die Räder dieser Achse besitzen keine eigenen Drehzahlfühler. Sie werden vielmehr seitenweise vom Bremsdruck der Achse 1 mitgesteuert.

Die Bremszylinder 8, 10 sind über ein Regelventil 14 an eine Druckmittel-Vorratsleitung 23 angeschlossen. Die Bremszylinder 9, 11 sind über ein weiteres Regelventil 15 ebenfalls an die Leitung 23 angeschlossen. Die Regelventile können als Magnetventile ausgebildet sein, oder nach anderen Prinzipien (z. B. piezoelektrisch) arbeiten.

Das Regelventil 14 wird vom Kanal 19 der Elektronik 18 angesteuert. Das Regelventil 15 wird vom Kanal 20 der Elektronik 18 angesteuert. Die Regelung erfolgt in Abhängigkeit von den Signalen der Drehzahlfühler 4, 5.

Die Räder der dritten Achse 3 sind ebenfalls mit je einem Drehzahlfühler 6, 7 versehen. Die beiden Bremszylinder 12, 13 der dritten Achse werden gemeinsam über zwei hintereinandergeschaltete Regelventile 16, 17, welche an die Vorratsleitung 23 angeschlossen sind, gespeist. Die Ansteuerung des Regelventils 16 erfolgt über den dritten Kanal 21 der Elektronik 18 in Abhängigkeit von den Signalen des Drehzahlfühlers 7. Die Ansteuerung des weiteren Regelventils 17 erfolgt durch den vierten Kanal 22 der Elektronik 18 in Abhängigkeit von den Signalen des Drehzahlfühlers 6.

Die Anordnung funktioniert wie folgt:
Die Räder der ersten Achse 1 werden in bekannter Weise individuell geregelt. Somit wird das Blockieren dieser Räder mit Sicherheit verhindert.

Die Räder der zweiten Achse 2, die pneumatisch an die Räder der ersten Achse 1 angehängt sind, werden vom Bremsdruck dieser Achse mitgesteuert. Auch hier wird ein Blockieren im allgemeinen verhindert, da die Mitsteuerung seitenweise erfolgt. Gegebenenfalls können den Bremszylindern der zweiten Achse druckreduzierende Einrichtungen vorgeschaltet sein.

Die Räder der dritten Achse werden erfindungsgemäß über die Hintereinanderschaltung der beiden Regelventile 16, 17 versorgt. Wie im folgenden erläutert wird, erreicht man hierdurch in überraschender Weise eine Select-Low-Regelcharakteristik.

Falls das Regelventil 16 zur Drucksteigerung geöffnet ist, das Regelventil 17 aber wegen drohendem Blockieren eines Rades auf Entlüften geschaltet ist, werden beide Bremszylinder der Achse über das Ventil 17 entlüftet.

Falls umgekehrt das Ventil 16 auf Entlüften geschaltet ist, das Ventil 17 aber auf Belüften geschaltet ist, werden wiederum beide Bremszylinder, diesmal über das Ventil 16 entlüftet. Eine Entlüftung erfolgt natürlich auch, wenn beide Regelventile 16, 17 auf Entlüften geschaltet sind.

Eine Belüftung erfolgt nur, wenn beide Regelventile 16, 17 auf Belüften (Durchgang) geschaltet sind.

Falls das Regelventil 16 auf Druckhalten, das zweite Regelventil 17 aber auf Durchgang geschaltet ist, ergibt sich eine Druckhalte-Funktion. Dasselbe gilt für den umgekehrten Fall.

Falls das Regelventil 16 auf Entlüften, das Regelventil 17 aber auf Druckhalten geschaltet ist, ergibt sich eine Drucksenkung. In diesem Fall fehlt nämlich dem Ventil 17 der Eingangsdruck. Das Ventil 17 ist intern so aufgebaut, daß dadurch statt des Druckhaltens eine Drucksenkung erfolgt. Falls dagegen das Regelventil 16 auf Druckhalten und das Regelventil 17 auf Drucksenken geschaltet ist, ergibt sich in normaler Weise eine Drucksenkung.

Für eine einwandfreie Regelung durch die beschriebene Hintereinanderschaltung der beiden Regelventile 16, 17 ist es erforderlich, die beiden zugehörigen Regelkanäle 21, 22 mit der oben beschriebenen MIR-Logik zu versehen. Auf Straßen mit gleichmäßigem Reibwert ist nämlich nur dann eine korrekte Druckeinsteuerung möglich, wenn die Druckeinsteuerphasen etwa synchron verlaufen.

Die erfindungsgemäße Anordnung kann, wie in der Zeichnung dargestellt, bei der hinteren Achse eines Dreiachs-Sattelanhängers angewendet werden. Es ist jedoch auch eine Anwendung für die Lenkachse eines Motorwagens möglich.

Die Erfindung kann bei pneumatischen und bei hydraulischen Bremsanlagen angewendet werden.

Weiterhin ist auch möglich, die Erfindung bei einer Anordnung mit Vorspannzylindern anzuwenden. Hierbei ist die Bremsanlage pneumatisch ausgebildet, die Bremsen werden aber hydraulisch betätigt.

Durch die Erfindung ergibt sich der Vorteil geringer Lenkkräfte und Lenkwinkel während einer Bremsung bei Anwendung an einer Lenkachse. Bei Anwendung für die Vorderachse eines Anhängers ergibt sich eine Verringerung der Deichselkräfte. Bei Anwendung für adhäsionsgelenkte Sattel-Anhänger (s. Zeichnung) ergibt sich eine Verringerung der Lenkbewegungen.

Gegenüber dem Stand der Technik (DE-OS 30 26 254) ergibt sich eine Einsparung des Doppelabsperrventils und dessen Verrohrung. Hierdurch wird die Anlage preisgünstiger und sicherer.

Bei Ausfall der elektronischen Ansteuerung eines der beiden Regelventile 16, 17 bleibt dieses (z. B.16) in der geöffneten Stellung stehen. Die hintere Achse 3 wird in diesem Falle durch das verbleibende intakte Regelventil 17 nach den Signalen des zum intakten Rad gehörenden Drehzahlfühlers 6 geregelt.

**Patentansprüche**

1. Antiblockiersystem für ein Kraftfahrzeug mit einer mindestens zwei Regelkanäle aufweisenden Elektronik, (18), die zur Regelung von mindestens zwei Rädern des Fahrzeugs ausgelegt ist,
gekennzeichnet durch folgende Merkmale:
   a) Bei mindestens einer Achse (3) des Fahrzeugs sind zur Erzielung eines Select-Low-Regelverhaltens (SLR) die beiden zu dieser Achse (3) gehörenden Regelventile (16, 17) pneumatisch oder hydraulisch hintereinandergeschaltet.
   b) Die beiden Regelventile (16, 17) sind von je einem Regelkanal (21, 22) der Elektronik (18) ansteuerbar.
   c) Die Ansteuerung der beiden Regelventile (16, 17) erfolgt gemäß einer modifizierten Individual-Regelung (MIR), bei der der Bremskraftunterschied zwischen den beiden Regelkanälen (21, 22) begrenzt ist, und die Druckeinsteuerungsphasen etwa synchron ablaufen.

**Claims**

1. Anti-lock system for a motor vehicle having an electronic system (18) having at least two control channels, which is designed for controlling at least two wheels of the vehicle,
characterised by the following features:
   a) in at least one axle (3) of the vehicle the two control valves (16, 17) belonging to that axle (3) are connected in series pneumatically or hydraulically in order to obtain a "select low" control behaviour (SLC);
   b) the two control valves (16, 17) are each operable by a control channel (21, 22) of the electronic system (18);

c) the operation of the two control valves (16, 17) is effected in accordance with a modified individual control system (MIC) in which the difference in braking power between the two control channels (21, 22) is limited, and the pressure admission phases take place approximately synchronously.

## Revendications

1. Système antiblocage pour un véhicule, comportant une électronique (18) présentant au moins deux canaux de régulation, conçue pour la régulation d'au moins deux roues du véhicule,

   caractérisé par les caractéristiques suivantes :

   a) pour au moins un essieu (3) du véhicule, les deux vannes de régulation (16, 17) relatives à cet essieu (3) sont montées en série pneumatiquement ou hydrauliquement, afin d'obtenir un comportement de régulation "Select-Low" (SLR);

   b) les deux vannes de régulation (16, 17) peuvent être commandées chacune par un canal de régulation (21, 22) de l'électronique (18);

   c) la commande des deux vannes de régulation (16, 17) s'effectue conformément à une régulation individuelle modifiée (MIR), dans laquelle la différence de force de freinage entre les deux canaux de régulation (21, 22) est limitée, et les phases de mise en commande de pression se déroulent sensiblement en synchronisme.

EP 0 209 664 B1